(19) Europäisches Patentamt
European Patent Office
Office européen des brevets

(11) **EP 2 941 005 A1**

(12) **EUROPEAN PATENT APPLICATION**

(43) Date of publication:
**04.11.2015 Bulletin 2015/45**

(21) Application number: **14305637.2**

(22) Date of filing: **29.04.2014**

(51) Int Cl.:
*H04N 19/91* $^{(2014.01)}$  *H04N 19/19* $^{(2014.01)}$
*H04N 19/36* $^{(2014.01)}$  *H04N 19/176* $^{(2014.01)}$
*H04N 19/147* $^{(2014.01)}$  *H04N 19/61* $^{(2014.01)}$
*H04N 19/593* $^{(2014.01)}$  *H04N 19/90* $^{(2014.01)}$

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Thomson Licensing**
  **92130 Issy-les-Moulineaux (FR)**
• **INRIA - Institut National de Recherche en Informatique et en Automatique**
  **78150 Le Chesnay (FR)**

(72) Inventors:
• **Guillemot, Christine**
  **35042 Rennes Cedex (FR)**
• **Alain, Martin**
  **35576 Cesson-Sévigné (FR)**
• **Thoreau, Dominique**
  **35576 Cesson-Sévigné (FR)**
• **Guillotel, Philippe**
  **35576 Cesson-Sévigné (FR)**

(74) Representative: **Desvignes, Agnès et al**
  **Marks & Clerk France**
  **Immeuble Visium**
  **22, avenue Aristide Briand**
  **94117 Arcueil Cedex (FR)**

(54) **Method and apparatus for building an estimate of an original image from a low-quality version of the original image and an epitome**

(57) The present invention concerns a method and apparatus for building an estimate ($\hat{Y}$) of an original image (Y) from a low-quality version ($Y^l$) of the original image and an epitome ($E^h$) calculated from an image. The method is characterized in that it comprises:
- obtaining (11) a dictionary comprising at least one pair of patches, each pair of patches comprising a patch of the epitome, called a first patch, and a patch of the low-quality version of the original image, called a second patch, a pair of patches being extracted for each patch of the epitome by inplace matching patches from the epitome and those from the low-quality image,

- for each patch of the low-quality version of the original image, selecting (12) at least one pair of patches within the dictionary of pairs of patches, each pair of patches being selected according to a criterion involving the patch of the low-quality version of the original image and the second patch of said selected pair of patches,
- obtaining (13) a mapping function from said at least one selected pair of patches, and
- projecting (14) the patch of the low-quality version of the original image into a final patch ($\tilde{X}_h$) using the mapping function.

**Fig. 1**

**Description**

**1. Field of invention.**

The present invention generally relates to the building of an image by help of a low-quality version of an original image and an epitome.

**2. Technical background.**

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

An epitome is a condensed (factorized) representation of an image (or a video) signal containing the essence of the textural properties of this image.

An image is described by its epitome and an assignation map. The epitome contains a set of charts that originates from the image. The assignation map indicates for each block of the image which patch in the texture epitome is used for its building. In a coding context, an epitome needs to be stored and/or transmitted, together with an assignation map (S. Cherigui, C. Guillemot, D. Thoreau, P. Guillotel, and P. Perez, "Epitome-based image compression using translational sub-pixel mapping," IEEE MMSP 2011).

Different forms of epitomes have been proposed, such as an image summary of high "completeness" (D. Simakov, Y. Caspi, E. Shechtman, M. Irani, "Summarizing visual data using bidirectional similarity", Computer Vision and Pattern Recognition, CVPR 2008) or a patch-based probability model learned either from still image patches (N. Jojic et al, "Epitomic analysis of appearance and shape", in Proc.IEEE Conf. Comput. Vis. (ICCV'03), pp.34-41, 2003) or from space-time texture cubes taken from the input video (V. Cheung, B. J. Frey, and N. Jojic, "Video Epitomes", International Journal of Computer Vision, vol.76, No.2, Feb. 2008). These probability models together with appropriate inference algorithms, are useful for content analysis in-painting or super-resolution.

Another family of approaches makes use of computer vision techniques, like the KLT tracking algorithm, in order to recover self-similarities within and across images (H. Wang, Y. Wexler, E. Ofek, H. Hoppe, "Factoring repeated content within and among images", ACM Transactions on Graphics, SIGGRAPH 2008).

In parallel, another type of approach has been introduced in (M. Aharon and M. Elad, "Sparse and Redundant Modeling of Image Content Using an Image-Signature-Dictionary", SIAM J. Imaging Sciences, Vol. 1, No. 3, pp. 228-247, Jul. 2008) which aims at extracting epitome-like signatures from images using sparse coding and dictionary learning.

Intra prediction methods based on image epitome have been introduced in (A. Efros, T. Leung, "Texture synthesis by non-parametric sampling", in International Conference on Computer Vision, pages 1033-1038, 1999) where a prediction for each block is generated from the image epitome by Template Matching. An intra-coding method based on video epitomic analysis has also been proposed in (Q. Wang, R. Hu, Z. Wang, "Intra coding in H.264/AVC by image epitome", PCM 2009) where the transform map (matching vectors) is coded with fixed length code which are determined by the length and width of image epitome. The epitome image used by these two approaches is based on EM (Expectation Maximization) algorithm with a pyramidal approach.

This kind of epitome image preserves the global texture and shape characteristics of original image but introduces undesired visual artefacts (e.g. additional patches which were not in the input image).

**3. Summary of the invention.**

The invention remedies to some of the drawbacks of the prior art with a method for building an estimate of an original image from a low-quality version of this original image and an epitome which limits undesired artifacts in the built estimate of the original image.

More precisely, the method obtains a dictionary comprising at least one pair of patches, each pair of patches comprising a patch of the epitome, called a first patch, and a patch of the low-quality version of the original image, called a second patch. A pair of patches is extracted for each patch of the epitome by in-place matching patches from the epitome and those from the low-quality image.

Next, for each patch of the low-quality version of the original image, the method selects at least one pair of patches within the dictionary of pairs of patches, each pair of patches being selected according to a criterion involving the patch of the low-quality version of the original image and the second patch of said selected pair of patches.

Then, the method obtains a mapping function from said at least one selected pair of patches, projects the patch of the low-quality version of the original image into a final patch using the mapping function.

According to a variant, when the final patches overlap one over each other in one pixel, the method further averages the final patches in one pixel to give the pixel value of the estimate of the original image.

According to an embodiment, said at least one selected pair of patches is a nearest neighbor of the patch of the low-quality version of the original image.

According to an embodiment, the mapping function is obtained by learning from said at least one selected pair of patches.

According to an embodiment, learning the mapping function is defined by minimizing a least squares error between the first patches and the second patches of said at least one selected pair of patches.

According to an embodiment, the low-quality version of the original image is an image which has the resolution of the original image.

According to an embodiment, the low-quality version of the original image is obtained as follows:

- generating a low-resolution version of the original image,
- encoding the low-resolution version of the image,
- decoding the low-resolution version of the image, and
- interpolating the decoded low-resolution version of the image in order to get a low-quality version of the original image with a resolution identical to the resolution of the original image.

According to an embodiment, the epitome is obtained from the original image.

According to an embodiment, the epitome is obtained from a low-resolution version of the original image.

According to one of its aspects, the invention relates to an apparatus for building an estimate of an original image from a low-quality version of the original image and an epitome calculated from an image. The apparatus is characterized in that it comprises means for:

- obtaining a dictionary comprising at least one pair of patches, each pair of patches comprising a patch of the epitome, called a first patch, and a patch of the low-quality version of the original image, called a second patch, a pair of patches being extracted for each patch of the epitome by in-place matching patches from the epitome and those from the low-quality image,
- for each patch of the low-quality version of the original image, selecting at least one pair of patches within the dictionary of pairs of patches, each pair of patches being selected according to a criterion involving the patch of the low-quality version of the original image and the second patch of said selected pair of patches,
- obtaining a mapping function from said at least one selected pair of patches,
- projecting the patch of the low-quality version of the original image into a final patch using the mapping function.

The specific nature of the invention as well as other objects, advantages, features and uses of the invention will become evident from the following description of a preferred embodiment taken in conjunction with the accompanying drawings.

**4. List of figures.**

The embodiments will be described with reference to the following figures:

- **Fig. 1** shows a diagram of the steps of a method for building an estimate of an original image from a low-quality version of the original image and an epitome calculated from an image;
- **Fig. 2** shows a diagram of the steps of an embodiment of the method describes in relation with **Fig. 1;**

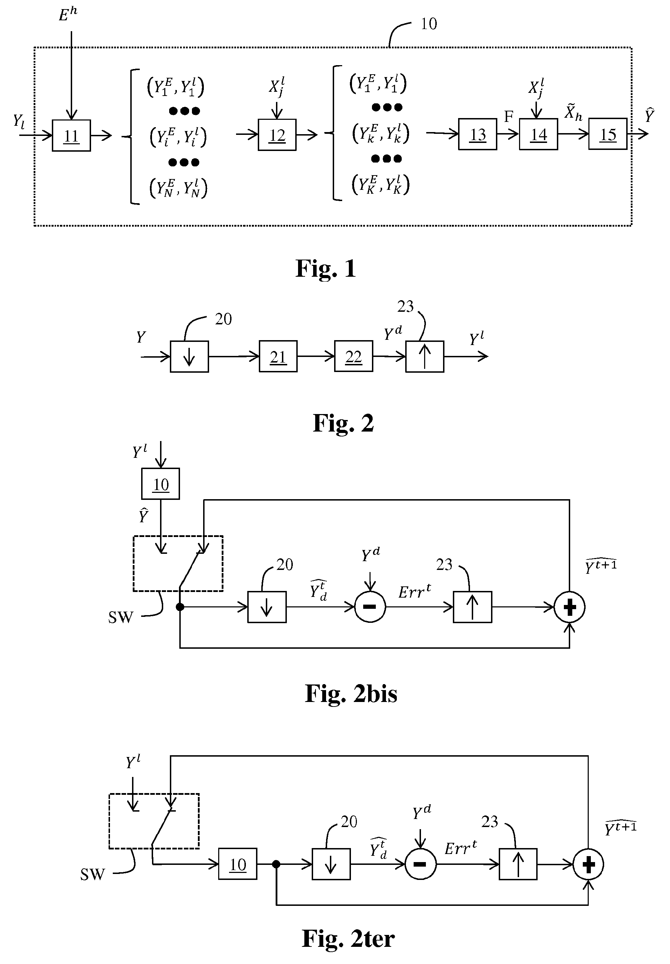

- **Fig. 2bis** shows a diagram of the steps of a variant of the embodiment of the method described in relation with **Fig. 1;**
- **Fig. 2ter** shows a diagram of the steps of another variant of the embodiment of the method described in relation with **Fig. 1;**

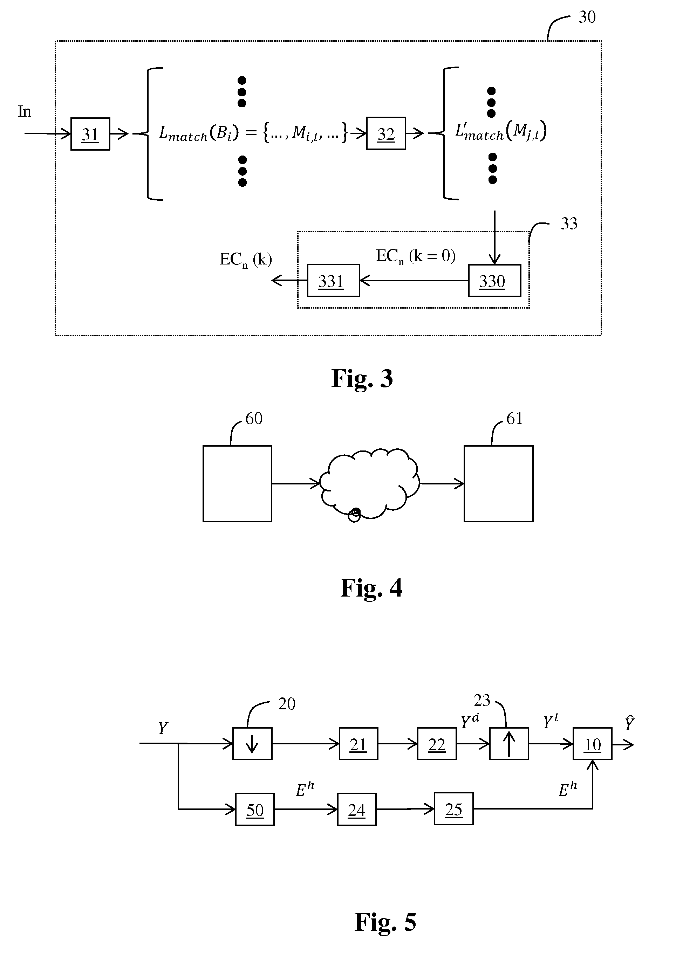

- **Fig. 3** illustrates an embodiment of a step for obtaining an epitome from an image;
- **Fig. 4** shows an example of the encoding/decoding scheme in a transmission context;
- **Fig. 5** shows a diagram of the steps of an example of the encoding/decoding scheme implementing an embodiment of the method for building an estimate of an original image;

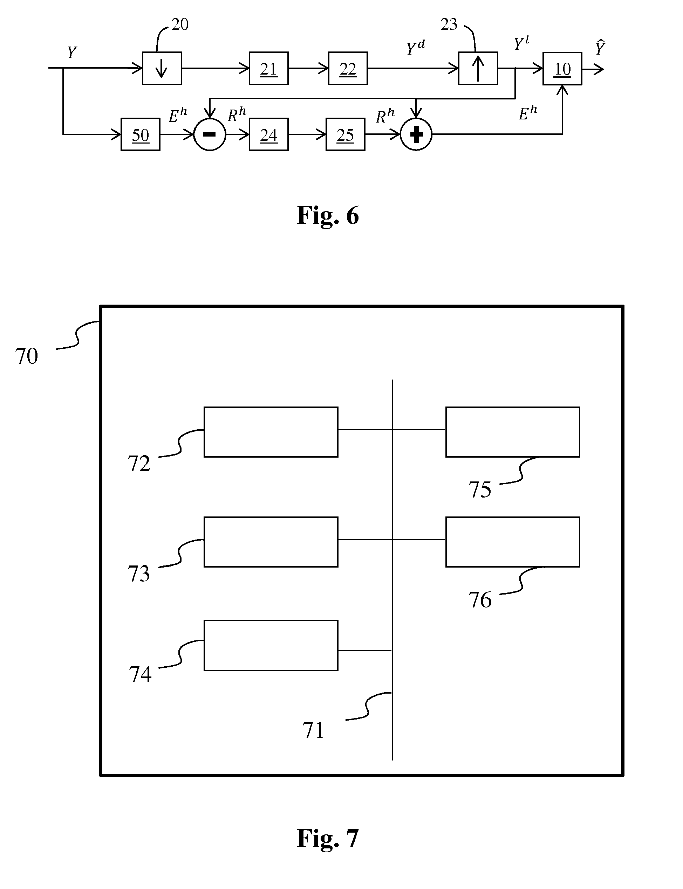

- **Fig. 6** shows a diagram of the steps of variant of the encoding/decoding scheme of the **Fig. 5;**
- **Fig. 7** shows an example of an architecture of a device.

**5. Detailed description of a preferred embodiment of the invention.**

The present invention will be described more fully herein-after with reference to the accompanying figures, in which embodiments of the invention are shown. This invention may, however, be embodied in many alternate forms and should not be construed as limited to the embodiments set forth herein. Accordingly, while the invention is susceptible to various modifications and alternative forms, specific embodiments thereof are shown by way of example in the drawings and will herein be described in detail. It should be understood, how-ever, that there is no intent to limit the invention to the particular forms disclosed, but on the contrary, the invention is to cover all modifications, equivalents, and alternatives falling within the spirit and scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to mother element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

**Fig. 1** shows a diagram of the steps of a method for building an estimate $\hat{Y}$ *of an original image* $Y$ from a low-quality version $Y^l$ of the original image $Y$ and an epitome $E^h$ calculated from an image. The method has a reference 10 in the following.

The epitome $E^h$ comprises N patches denoted $Y_i^E, i = 1 \dots N$.

In the following, a patch is a part of adjacent pixels of an image.

At step 11, a dictionary of at least one pair of patches $\left(Y_i^E, Y_i^l\right)$ is obtained as follows: For each patch $Y_i^E$ of the epitome $E^h$, a patch $Y_i^l$ located at the same position in the low-quality image $Y^l$ is extracted, i.e. a pair of patches $\left(Y_i^E, Y_i^l\right)$ is extracted for each patch $Y_i^E$ by in-place matching patches from the epitome $E^h$ and those from the low-quality image $Y^l$.

In the following, the patch $Y_i^E$ of a pair of patches $\left(Y_i^E, Y_i^l\right)$ is called a first patch and the other patch $Y_i^l$ is called the second patch.

At step 12, for each patch $X_j^l$ of the low-quality image $Y^l$, K pairs of patches $\left(Y_k^E, Y_k^l\right), k = 1, \dots K$ within

the dictionary are selected, each pair of patches $\left(Y_k^E, Y_k^l\right)$ being selected according to a criterion involving the patch $X_j^l$ of the low-quality image $Y^l$ and the second patch $Y_k^l$ of said pair of patches.

Note that K is an integer value which may equal 1.

According to an embodiment, the K selected second patches $Y_k^l$ are the K nearest neighbors (K-NN) of the patch $X_j^l$ of the low-quality image $Y^l$.

At step 13, a mapping function is obtained from said K selected pairs of patches $\left(Y_k^E, Y_k^l\right)$.

According to an embodiment, the mapping function is obtained by learning from these K pairs of patches. Such a learning may use, for example, linear or kernel regression.

Note that regression has been already considered by K. Kim et al. ("Single-image super-resolution using sparse regression and natural image prior," IEEE Trans. Pattern Analysis and Machine Intelligence, vol. 32, no. 6, pp. 1127-1133, 2010) for single-image super-resolution taking example pairs from an external set of training images, requiring a large set of training examples. Z. L. J. yang et al. ("Fast image super-resolution based on in-place example regression, " in Proc. IEEE International Conf. on Computer Vision and Pattern Recognition (CVPR), 2013, pp. 1059-1066) extract sample pairs between a low-frequency version (convolving the input image with a Gaussian kernel) and a bi-cubic interpolated version of the low-quality image. As far as the super-resolution algorithm is concerned, the major difference here resides in the fact that the matching pairs are given by the epitome. More precisely, exploiting the fact that the epitome is a factorized representation of the original image, a local learning of mapping function can be performed using only a small set of pairs of patches.

According to an embodiment, learning a mapping function is defined by minimizing a least squares error between the first patches and the second patches of the K selected pairs of patches $\left(Y_k^E, Y_k^l\right)$ as follows:

Let $M_l$ be a matrix containing in its columns the second patches $Y_k^l$ of the K selected pairs of patches.

Let $M_h$ be a matrix containing in its columns the first patches $Y_k^E$ of the K selected pairs of patches.

Considering multivariate linear regression, the problem is of searching for a mapping function F minimizing:

$$E = \left\| (M_h)^T - (M_l)^T F^T \right\|^2$$

This equation corresponds to a linear regression model Y=XB+E and its minimization gives the following least squares estimator:

$$F = M_h M_l^T (M_l M_l^T)^{-1}$$

According to a variant, a patch $X_j^l$ in the low-quality image $Y^l$ overlaps at least one other patch of the low-quality image $Y^l$. For example, the overlapping factor is a parameter which can be tuned, and is set to 7 for 8x8 patches.

At step 14, each patch $X_j^l$ of the low-quality image $Y^l$, is projected into a patch $\tilde{X}_h$ using the mapping function F as follows:

$$X_j^l \xrightarrow{F} \tilde{X}_h \, , i.e \quad \tilde{X}_h = F \, x \, X_j^l$$

At step 15, when the patches $\tilde{X}_h$ overlap one over each other in one pixel, then, the overlapping patches $\tilde{X}_h$ in one pixel are averaged to give the pixel value of the estimate $\hat{Y}$ of the original image.

According to an embodiment of the method, illustrated in Fig. 2, the low-quality version $Y^l$ of the original image is an image which has the resolution of the original image.

According to an embodiment of this embodiment, the low-quality version of the original image is obtained as follows:

At step 20, a low-resolution version of the original image is generated using a low-pass filtering and down-sampling. Typically, a down-sampling factor of 2 is used.

At step 21, the low-resolution version of the original image is encoded.

At step 22, the encoded low-resolution version of the original image is decoded.

The invention is not limited to any specific encoder/decoder. For example, an H.264 defined in MPEG-4 AVC/H.264 described ion the document ISO/IEC 14496-10, or HEVC HEVC (High Efficiency Video Coding) described in the document (B. Bross, W.J. Han, G. J. Sullivan, J.R. Ohm, T. Wiegand JCTVC-K1003, "High Efficiency Video Coding (HEVC) text specification draft 9," Oct 2012.) encoder/decoder may be used.

At step 23, the decoded low-resolution version $Y^d$ is interpolated using a simple bi-cubic interpolation for example. The low-quality version $Y^l$ of the original image thus obtained has a resolution identical to the resolution of the original image.

**Fig. 2bis** shows a diagram of the steps of a variant of the embodiment of the method described in relation with **Fig. 1.**

According to this variant, the estimate $\hat{Y}$ of an original image $Y$ which is built according to the step 10 **(Fig. 1)** is iteratively back-projected in a low-resolution image space, and the back-projected version $\widehat{Y_d^t}$ of the estimate $\hat{Y}$ at iteration **t** is compared with a low-resolution version of the original image.

In a coding/decoding context, the low-resolution version of the original image is the decoded low-resolution version $Y^d$, output of the step 22.

This variant ensures consistency between the final estimate and the low-resolution version $Y^d$.

At iteration **t**, an estimate of the original image $Y$ is considered.

The switch SW shown in **Fig.** 2bis, indicates the estimate $\hat{Y}$, which is built according to the step 10 **(Fig. 1),** is considered at the first iteration and the estimate $\overline{Y^{t+1}}$ calculated at an iteration (t+1) is considered at the iteration (t+2). The estimate is then back-projected in the low-resolution image space, i.e the space in which the low-resolution version $Y^d$ of the original image is defined according to the downsampling factor (step 20).

In practice, the back-projected version $\widehat{Y_d^t}$ of the considered estimate is generated using the same downsampling factor as that of step 20.

Next, an error $Err^t$ is calculated between the back-projected version $\widehat{Y_d^t}$ and the low-resolution version $Y^d$ of the original image.

The error $Err^t$ is then upsampled (step 23) and the upsampled error is added to the considered estimate to get a new estimate.

Mathematically speaking, the new estimate $\overline{Y^{t+1}}$ is given by: $\widehat{Y^{t+1}} = \widehat{Y^t} + \left(\left(Y^d - \widehat{Y_d^t}\right) \uparrow m\right) *$ where

p is a back-projection filter which locally spreads the error and m a dowsampling factor (m=2 for instance).

The iteration stops when a criteria is checked such as a maximum number of iteration or when the means error calculated over the error $Err^t$ is below a given threshold.

**Fig. 2ter** shows a diagram of the steps of another variant of the embodiment of the method described in relation with **Fig. 1.**

According to this variant, the low-quality version of the original image used to obtain the dictionary (step 11) and the mapping function (step 13) is iteratively updated by back-projecting a current estimate of the original image ($Y$) in a low-resolution image space, and by adding to the current estimate an error calculated between the back-projected version $\widehat{Y_d^t}$ of the current estimate at iteration **t** with a low-resolution version $Y^d$ of the original image.

At iteration **t**, an estimate of the original image $Y$ is considered.

The switch SW shown in **Fig. 2ter,** indicates the low-quality version $Y^l$ of the original image $Y$, which is built according to **Fig. 2,** is considered at the first iteration and an estimate of the original image calculated at an iteration (t+1) is considered at the iteration (t+2).

In practice, an estimate of the original image is obtained from the step 10 either from the low-quality version $Y^l$ of the original image $Y$ (iteration 1) or from an estimate of the original image calculated at a previous iteration.

In practice, the back-projected version $\widehat{Y_d^t}$ of the considered estimate is generated using the same downsampling factor as that of step 20.

Next, an error $Err^t$ is calculated between the back-projected version $\widehat{Y_d^t}$ and the low-resolution version $Y^d$ of the original image.

In a coding/decoding context, the low-resolution version of the original image is the decoded low-resolution version $Y^d$, output of the step 22.

The error $Err^t$ is then upsampled (step 23) and the upsampled error is added to the considered estimate $\overline{Y^t}$ to get a new estimate $\overline{Y^{t+1}}$ of the original image.

The iteration stops when a criteria is checked such as a maximum number of iteration or when the means error calculated over the error $Err^t$ is below a given threshold.

**Fig. 3** illustrates an embodiment of a step 30 for obtaining an epitome $E_h$ from an image In. This method is detailed in *(S. Cherigui, C. Guillemot, D. Thorea u, P. Guillotel, and P. Perez, "Epitome-based image compression using translational sub-pixel mapping, "IEEE MMSP 2011).*

An image In is described by its epitome $E^h$ and an assignation map $\Phi$. The epitome contains a set of charts that originates from the image In. The assignation map indicates for each block of the image In which patch in the texture epitome is used for its reconstruction.

The image In is divided into a regular grid of blocks $B_i$, and each block $B_i$ is approximated from an epitome patch via an assignation map $\varphi_i$. The construction method is basically composed of three steps: finding self-similarities, creating epitome charts and improving the quality of reconstruction by further searching for best matching and by updating accordingly the assignation map.

At step 31, finding self-similarities within the image In consists in searching for a set of patches in the image In with a content which is similar to each block $B_i$ in the image In. That is, for each block $B_i \in In$, a match list $L_{match}(B_i)$ = $\{M_{i,0}, M_{i,1},...\}$ of matched patches $M_{i,l}$ that approximate the block $B_i$ with a given error tolerance $\epsilon$. For example, the matching is performed with a block matching algorithm using an average Euclidian distance. An exhaustive search may be performed on the whole image In.

Once all the match lists have been created for a given set of image blocks, at step 32, a new list $L'_{match}(M_{j,l})$, indicating a set of image blocks that could be represented by a matched patch $M_{j,l}$ is built. Note that all the matching blocks $M_{j,l}$ found during the exhaustive search are not necessarily aligned with the block grid of the image and thus belong to the "pixel grid".

At step 33, epitome charts are built from selected texture patches selected from the input image. Each epitome chart represents specific areas of the image In.

During an initialization substep 330, an integer value n, which is the index of the current epitome chart $EC_n$, is set to zero. The current epitome chart $EC_n$ is initialized by the most representative texture patch of remaining no reconstructed image blocks.

Mathematically speaking, a current epitome chart is initialized, for example, by the minimization of the Mean Square Errors (MSE) criterion:

$$min\left(\frac{\sum_{i=1}^{N}\sum_{j=1}^{M}\left(Y(i,j)-Y'(i,j)\right)}{N x M}\right) \qquad (1)$$

where $Y'(i, j)$ is an image reconstructed by a given texture patch.

The equation (1) considers the prediction errors on the whole image In. That is, this criterion is applied not only to image blocks that are approximated by a given texture patch but also to the image blocks which are not approximated by this patch. As a variant, a zero value is assigned to image pixels that have not reconstructed by this patch when computing the image reconstruction error. Thus, this criterion enables the current epitome chart to be extended by a texture pattern that allows the reconstruction of the largest number of blocks as well as the minimization of the reconstruction error.

During an extension substep 331, a current epitome chart $EC_n$ is progressively extended by an optimal extension $\Delta E_{opt}$ from the image In, and each time the current epitome chart is enlarged, one keeps track of the number of additional blocks which can be predicted in the image In.

Let **k** be the number of times where the current epitome chart is extended. The initial epitome chart $EC_n$ (k = 0) corresponds to the texture patch retained at the initialization substep 330. The extension step 331 proceeds first by determining the set of matched patches $M_{j,l}$ that overlap the current chart $EC_n(k)$ and represent other image blocks.

Therefore, there are several extension candidates $\Delta E$ that can be used as an extension of the current epitome chart. Let **m** be the number of extension candidates found after **k** extensions of the epitome chart. For each extension candidate $\Delta E$, the additional image blocks that could be built is determined from the list $L'_{match}(M_{j,l})$ related only to the matched patch $M_{j,l}$ containing the set of pixels $\Delta E$. Then, is selected the optimal extension $\Delta E^k_{opt}$ among the set of extension candidates found. This optimal extension leads to the best match according to a rate distortion criterion which may be given, for example, for example by the minimization of lagrangian criterion:

$$min\left(D_{E_{cur}+\Delta E} + \lambda x R_{E_{cur}+\Delta E}\right) \qquad (2)$$

$$\Delta E^k_{opt} = \underset{m}{\text{argmin}}\left(\frac{\sum_{i=1}^{N}\sum_{j=1}^{M}(Y(i,j)-Y'(i,j))}{NxM} + \lambda\left(\left(\frac{E_{cur}+\Delta E_m}{NxM}\right)\right)\right)$$

with $\lambda$ a well-known lagrangian parameter,

The first term $D_{E_{cur}+AE}$ of the criterion (2) refers to the average prediction error per pixel when an estimate of the image In is built by texture information contained in the current epitome $E_{cur} = \sum_{i=1}^{n} EC_i$ and the extension candidate $\Delta Em$. As done in the initialization substep 330, when the image pixels are impacted neither by the current epitome nor by the extension candidate $\Delta E_m$, a zero value is assigned. The second term $R_{E_{cur}+AE}$ of the criterion (2) corresponds to a rate per pixel when constructing the epitome, which is roughly estimated as the number of pixels in the current epitome $E_{cur}$ and its extension candidate $\Delta E_m$ divided by the total number of pixels within the image In.

When the optimal extension $\Delta E^k_{opt}$ is selected, the current epitome chart becomes:

$$EC_n(k + 1) = EC_n(k) + \Delta E^k_{opt}$$

Then, we keep on extending the current epitome chart until there are no more matched patches $M_{j,l}$ that overlap the current epitome chart and represent other blocks. Thus, when the current chart $EC_n$ cannot be extended anymore and when the whole image is not yet represented by the current epitome, the index **n** is incremented by 1 and another epitome chart is initialized at a new location in the image. The process ends when the whole image is built by the epitome.

According to an embodiment of the step 30, the image In is the original image. The epitome $E^h$ is thus obtained from the original image.

According to an embodiment of the step 30, the image In is a low-resolution version $Y^d$ of the original image. The epitome $E^h$ is thus obtained from a low-resolution version of the original image.

According to a variant of this embodiment, the low-resolution version $Y^d$ of the original image is obtained by the steps 20, 21 and 22 of **Fig. 2.**

This embodiment and its variant are advantageous in a transmission context of encoded images because they avoid the transmission of the epitome and thus reduce the transmission bandwidth.

The method for building an *estimate Y* of an original image *Y* described in relation with **Fig. 1** may be used in an encoding/decoding scheme to transmit an encoded original image *Y* between a transmitter 60 and a receiver 61 via a communication network as illustrated in **Fig. 4.**

As illustrated in **Fig. 5,** a low-resolution version of the original image is generated (step 20), then encoded (step 21) and decoded (step 22). A low-quality version $Y^l$ of the original image is then obtained by interpolating the decoded low-resolution version of the original image (step 23).

Finally, the estimate $\hat{Y}$ of an original *image Y* is built according to the step 10 **(Fig. 1)** from the low-quality version $Y^l$ of the original image and an epitome calculated according to an embodiment or variant of the step 30 **(Fig. 3)**.

Note that, as illustrated, when the epitome is calculated from the original $Y$ (step 50), the epitome is encoded (step 24) and decoded (step 25).

The invention is not limited to any specific encoder/decoder. For example, an H.264 or HEVC encoder/decoder may be used.

**Fig. 6** shows a variant of the encoding/decoding scheme described in relation with the **Fig. 5.**

In this variant, a residual data $R_h$ is obtained by calculating the difference between the epitome $E^h$ and the low-quality version $Y^l$ of the original image (step 23). The residual data $R_h$ is then encoded (step 24), decoded (step 25) and the decoded residual data is then added to the low-quality version of the original image (step 23) to obtain the epitome at the decoder side. The estimate $\hat{Y}$ of the original image $Y$ is then obtained from the low-quality version $Y^l$ of the original image and the epitome (step 10).

**Fig. 7** represents an exemplary architecture of a device 70.

Device 70 comprises following elements that are linked together by a data and address bus 71:

- a microprocessor 72 (or CPU), which is, for example, a DSP (or Digital Signal Processor);
- a ROM (or Read Only Memory) 73;
- a RAM (or Random Access Memory) 74;
- an I/O interface 75 for reception of data to transmit, from an application; and
- a battery 76

According to a variant, the battery 76 is external to the device. Each of these elements of **Fig. 7** are well-known by those skilled in the art and won't be disclosed further. In each of mentioned memory, the word « register » used in the specification can correspond to area of small capacity (some bits) or to very large area (e.g. a whole program or large amount of received or decoded data). ROM 73 comprises at least a program and parameters. At least one algorithm of the methods described in relation with Fig. 1-6 are stored in the ROM 73. When switched on, the CPU 72 uploads the program in the RAM and executes the corresponding instructions.

RAM 74 comprises, in a register, the program executed by the CPU 72 and uploaded after switch on of the device 70, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. Method for building an estimate ($\hat{Y}$) of an original image *(Y)* from a low-quality version *($Y^l$)* of the original image and an epitome *($E^h$)* calculated from an image, **characterized in that** it comprises:

    - obtaining (11) a dictionary comprising at least one pair of patches, each pair of patches comprising a patch of the epitome, called a first patch, and a patch of the low-quality version of the original image, called a second patch, a pair of patches being extracted for each patch of the epitome by in-place matching patches from the epitome and those from the low-quality image,
    - for each patch of the low-quality version of the original image, selecting (12) at least one pair of patches within the dictionary of pairs of patches, each pair of patches being selected according to a criterion involving the patch of the low-quality version of the original image and the second patch of said selected pair of patches,
    - obtaining (13) a mapping function from said at least one selected pair of patches, and
    - projecting (14) the patch of the low-quality version of the original image into a final patch ($\tilde{X}_h$) using the mapping function.

2. Method according to the claim 1, wherein when the final patches overlap one over each other in one pixel, the method further comprises a step for averaging (15) the final patches in one pixel to give the pixel value of the estimate of the original image.

3. Method according to the claim 1 or 2, wherein said at least one selected pair of patches is a nearest neighbor of the patch of the low-quality version of the original image.

4. Method according to any previous claim, wherein the mapping function is obtained by learning from said at least one selected pair of patches.

5. Method according to the claim 4, wherein, learning the mapping function is defined by minimizing a least squares error between the first patches and the second patches of said at least one selected pair of patches.

6. Method according to any previous claim, wherein the low-quality version of the original image is an image which has the resolution of the original image.

7. Method according to the claim 6, wherein the low-quality version of the original image is obtained as follows:

    - generating a low-resolution version of the original image (20),
    - encoding the low-resolution version of the image (21),
    - decoding the low-resolution version of the image (22), and
    - interpolating the decoded low-resolution version of the image (23) in order to get a low-quality version of the original image with a resolution identical to the resolution of the original image.

8. Method according to any previous claims, wherein the epitome is obtained from the original image.

9. Method according to one of the claims 1 to 7, wherein the epitome is obtained from a low-resolution version of the original image.

10. The method according to one of the claims 1-9, wherein the estimate ($\hat{Y}$) of an original image *(Y)* is iteratively back-projected in a low-resolution image space, and the back-projected version ($\widehat{Y_d^t}$) *of* the estimate ($\hat{Y}$) at iteration **t** is compared with a low-resolution version ($Y^d$) of the original image.

**11.** The method according to one of the claims 1-9, wherein the low-quality version of the original image used to obtain the dictionary and the mapping function is iteratively updated by back-projecting a current estimate of the original image (Y) in a low-resolution image space, and by adding to the current estimate an error calculated between the back-projected version of the current estimate at iteration t with a low-resolution version ($Y^d$) of the original image.

**12.** Apparatus for building an estimate ($\hat{Y}$) of an original image *(Y)* from a low-quality version ($Y^l$) of the original image and an epitome ($E^h$) calculated from an image, **characterized in that** it comprises means for:

- obtaining (11) a dictionary comprising at least one pair of patches, each pair of patches comprising a patch of the epitome, called a first patch, and a patch of the low-quality version of the original image, called a second patch, a pair of patches being extracted for each patch of the epitome by in-place matching patches from the epitome and those from the low-quality image,
- for each patch of the low-quality version of the original image, selecting (12) at least one pair of patches within the dictionary of pairs of patches, each pair of patches being selected according to a criterion involving the patch of the low-quality version of the original image and the second patch of said selected pair of patches,
- obtaining (13) a mapping function from said at least one selected pair of patches, and
- projecting (14) the patch of the low-quality version of the original image into a final patch ($\tilde{X}_h$) using the mapping function.

**Fig. 1**

**Fig. 2**

**Fig. 2bis**

**Fig. 2ter**

$$L_{match}(B_i) = \{..., M_{i,l}, ...\} \qquad L'_{match}(M_{j,l})$$

In → 31 →

32 →

$EC_n(k)$ ← 331 ← $EC_n(k = 0)$ ← 330

33

30

## Fig. 3

60

61

## Fig. 4

$Y$ → 20 ↓ → 21 → 22 → $Y^d$ → 23 ↑ → $Y^l$ → 10 → $\hat{Y}$

→ 50 → $E^h$ → 24 → 25 → $E^h$ →

## Fig. 5

**Fig. 6**

**Fig. 7**

Europäisches
Patentamt

European
Patent Office

Office européen
des brevets

# EUROPEAN SEARCH REPORT

Application Number

EP 14 30 5637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOAV HACOHEN ET AL: "Image upsampling via texture hallucination", COMPUTATIONAL PHOTOGRAPHY (ICCP), 2010 IEEE INTERNATIONAL CONFERENCE ON, IEEE, PISCATAWAY, NJ, USA, 29 March 2010 (2010-03-29), pages 1-8, XP031763027, ISBN: 978-1-4244-7022-8 * paragraph [0002] - paragraph [0003] * | 1-12 | INV. H04N19/91 H04N19/19 H04N19/36 H04N19/176 H04N19/147 H04N19/61 H04N19/593 H04N19/90 |
| X | QIJUN WANG ET AL: "Spatially Scalable Video Coding Based on Hybrid Epitomic Resizing", DATA COMPRESSION CONFERENCE (DCC), 2010, IEEE, PISCATAWAY, NJ, USA, 24 March 2010 (2010-03-24), pages 139-148, XP031661655, ISBN: 978-1-4244-6425-8 * paragraph [0002] - paragraph [0003] * | 1-12 | |
| X | QIJUN WANG ET AL: "Intracoding and Refresh With Compression-Oriented Video Epitomic Priors", IEEE TRANSACTIONS ON CIRCUITS AND SYSTEMS FOR VIDEO TECHNOLOGY, IEEE SERVICE CENTER, PISCATAWAY, NJ, US, vol. 22, no. 5, 1 May 2012 (2012-05-01), pages 714-726, XP011443100, ISSN: 1051-8215, DOI: 10.1109/TCSVT.2011.2177939 * paragraph [IIIE] * | 1-12 | **TECHNICAL FIELDS SEARCHED (IPC)**<br><br>H04N |
| A | US 2009/208110 A1 (HOPPE HUGUES H [US] ET AL) 20 August 2009 (2009-08-20) * the whole document * | 1-12 | |

-/--

The present search report has been drawn up for all claims

| Place of search | Date of completion of the search | Examiner |
|---|---|---|
| Munich | 1 August 2014 | Kuhn, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 30 5637

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2012/097882 A1 (THOMSON LICENSING [FR]; CHERIGUI SAFA [FR]; THOREAU DOMINIQUE [FR]; GU) 26 July 2012 (2012-07-26) <br> * the whole document * | 1-12 | |
| A,D | SAFA CHERIGUI ET AL: "Epitome-based image compression using translational sub-pel mapping", <br> MULTIMEDIA SIGNAL PROCESSING (MMSP), 2011 IEEE 13TH INTERNATIONAL WORKSHOP ON, IEEE, 17 October 2011 (2011-10-17), pages 1-6, XP032027526, <br> DOI: 10.1109/MMSP.2011.6093786 <br> ISBN: 978-1-4577-1432-0 <br> * the whole document * | 1-12 | |
| T | BISHOP C M ET AL: "Super-resolution Enhancement of Video", <br> INTERNATIONAL WORKSHOP ON ARTIFICIAL INTELLIGENCE AND STATISTICS.(AISTATS 2003), XX, XX, <br> no. 9TH, 3 January 2003 (2003-01-03), pages 1-8, XP002631362, <br> * the whole document * | | TECHNICAL FIELDS SEARCHED (IPC) |
| T | FREEMAN W T ET AL: "Example-based super-resolution", <br> IEEE COMPUTER GRAPHICS AND APPLICATIONS, IEEE SERVICE CENTER, NEW YORK, NY, US, vol. 22, no. 2, 1 March 2002 (2002-03-01), pages 56-65, XP011094241, <br> ISSN: 0272-1716, DOI: 10.1109/38.988747 <br> * the whole document * | | |

The present search report has been drawn up for all claims

| Place of search | Date of completion of the search | Examiner |
|---|---|---|
| Munich | 1 August 2014 | Kuhn, Peter |

EPO FORM 1503 03.82 (P04C01)

## EP 2 941 005 A1

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2014

| Patent document cited in search report | Publication date | Patent family member(s) | Publication date |
|---|---|---|---|
| US 2009208110 A1 | 20-08-2009 | EP 2252971 A2<br>US 2009208110 A1<br>WO 2009102562 A2 | 24-11-2010<br>20-08-2009<br>20-08-2009 |
| WO 2012097882 A1 | 26-07-2012 | EP 2666298 A1<br>US 2014029667 A1<br>WO 2012097882 A1 | 27-11-2013<br>30-01-2014<br>26-07-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. CHERIGUI ; C. GUILLEMOT ; D. THOREAU ; P. GUILLOTEL ; P. PEREZ.** Epitome-based image compression using translational sub-pixel mapping. *IEEE MMSP,* 2011
- **D. SIMAKOV ; Y. CASPI ; E. SHECHTMAN ; M. IRANI.** Summarizing visual data using bidirectional similarity. *Computer Vision and Pattern Recognition, CVPR,* 2008
- **N. JOJIC et al.** Epitomic analysis of appearance and shape. *Proc.IEEE Conf. Comput. Vis. (ICCV'03),* 2013, 34-41
- **V. CHEUNG ; B. J. FREY ; N. JOJIC.** Video Epitomes. *International Journal of Computer Vision,* February 2008, vol. 76 (2
- **H. WANG ; Y. WEXLER ; E. OFEK ; H. HOPPE.** Factoring repeated content within and among images. *ACM Transactions on Graphics, SIGGRAPH,* 2008
- **M. AHARON ; M. ELAD.** Sparse and Redundant Modeling of Image Content Using an Image-Signature-Dictionary. *SIAM J. Imaging Sciences,* July 2008, vol. 1 (3), 228-247
- **A. EFROS ; T. LEUNG.** Texture synthesis by non-parametric sampling. *International Conference on Computer Vision,* 1999, 1033-1038
- **Q. WANG ; R. HU ; Z. WANG.** Intra coding in H.264/AVC by image epitome. *PCM,* 2009
- **K. KIM et al.** Single-image super-resolution using sparse regression and natural image prior. *IEEE Trans. Pattern Analysis and Machine Intelligence,* 2010, vol. 32 (6), 1127-1133
- **Z. L. J. YANG et al.** Fast image super-resolution based on in-place example regression. *Proc. IEEE International Conf. on Computer Vision and Pattern Recognition (CVPR),* 2013, 1059-1066
- **B. BROSS ; W.J. HAN ; G. J. SULLIVAN ; J.R. OHM ; T. WIEGAND.** High Efficiency Video Coding (HEVC) text specification draft 9. *JCTVC-K1003,* October 2012
- **S. CHERIGUI ; C. GUILLEMOT ; D. THOREA ; U, P. GUILLOTEL ; P. PEREZ.** Epitome-based image compression using translational sub-pixel mapping. *IEEE MMSP,* 2011